# DEMANDE DE BREVET EUROPEEN

(11) **EP 4 813 778 A1**
(43) Date de publication de la demande: **30.09.2026**
(21) Numéro de dépôt: 26167238.0
(22) Date de dépôt: 24.03.2026
(51) Int. Cl.: B60W 30/095, B60W 30/18, B60W 50/14, B60W 50/00

(54) **PROCÉDÉ DE GÉNÉRATION D'UNE INFORMATION D'ALERTE LORS D'UNE MANOEUVRE D'UN VÉHICULE AINSI QUE PROCÉDÉ DE SIGNALISATION D'UN OBSTACLE ET PROCÉDÉ DE CONTRÔLE D'UN FREINAGE UTILISANT LADITE INFORMATION D'ALERTE**

(30) Priorité: 24.03.2025 FR 2502991
(71) Demandeur: AMPERE s.a.s., 92100 Boulougne-Billancourt (FR)
(72) Inventeur: DELLECI, Mohamed, 78084 Guyancourt cedex (FR)
(74) Mandataire: Renault Group

(57) **Abrégé**

**Procédé de génération d'une information (24) d'alerte** lors d'une manœuvre d'un véhicule, ledit procédé de génération étant mis en œuvre par un système de traitement numérique (1), ledit procédé de génération comprenant une étape de détermination d'une information (20) relative à une distance entre ledit véhicule et un obstacle, dite information de distance, une étape de détermination d'une information (22) relative à la vitesse du véhicule, dite information de vitesse, et une étape d'évaluation d'un niveau de risque de collision entre ledit véhicule et ledit obstacle en vue d'établir ladite information (24) d'alerte en tenant compte de ladite information (20) de distance et de ladite information (22) de vitesse.

## Description

L'invention concerne un procédé de génération d'une information d'alerte lors d'une manœuvre d'un véhicule ainsi qu'un procédé de signalisation d'un obstacle et un procédé de contrôle d'un freinage utilisant ladite information d'alerte. Elle trouvera ses applications, notamment, dans le domaine des véhicules automobiles.

Dans ce domaine, il est connu des systèmes d'émission d'alertes pour éviter une collision entre deux véhicules qui se suivent. Dans ce contexte il s'agit de pallier, notamment, un risque d'inattention du conducteur ou de modification brusque des conditions de trafic, tel qu'un freinage brusque des véhicules.

Dans un autre contexte correspondant à des opérations de manœuvre du véhicule, il est aussi connu de générer un signal selon différents niveaux d'alerte pour éviter une collision avec un obstacle se trouvant dans l'environnement du véhicule par exemple lors d'un stationnement ou d'une marche arrière. L'alerte est générée en fonction d'une information de distance provenant d'un capteur équipant le véhicule.

Bien qu'apportant une première aide pour éviter une collision avec l'obstacle lors des manœuvres, cette solution présente cependant des limites. Selon un exemple, si le conducteur applique ou maintient une vitesse élevée, émettre une alerte de niveau faible car l'obstacle est encore loin peut être inapproprié.

L'invention a pour objectif de pallier au moins en partie les inconvénients précédents et propose à cette fin un procédé de génération d'une information d'alerte lors d'une manœuvre d'un véhicule en marche arrière et/ou à vitesse réduite, ledit procédé de génération étant mis en œuvre par un système de traitement numérique, ledit procédé de génération comprenant une étape de détermination d'une information relative à une distance entre ledit véhicule et un obstacle, dite information de distance, une étape de détermination d'une information relative à la vitesse du véhicule, dite information de vitesse, et une étape d'évaluation d'un niveau de risque de collision entre ledit véhicule et ledit obstacle en vue d'établir ladite information d'alerte en tenant compte de ladite information de distance et de ladite information de vitesse.

Par « manœuvre », on entend un déplacement du véhicule en mache arrière et/ou en marche avant à faible vitesse, notamment en dessous de 15 km/h, voire moins de 10 km/h, voire même moins de 5 km/h, et/ou avec un rapport de transmission le plus élevé entre des roues et une motorisation du véhicule parmi les rapports proposés par un sélecteur de vitesse associé à la boîte de vitesse. Il s'agit, par exemple, d'opérations de stationnement du véhicule.

Grâce à la prise en compte de la vitesse, combinée avec celle de la distance, l'invention permet de fiabiliser l'évaluation du niveau de risque permettant de la sorte de mieux adapter une réaction du conducteur à l'aide de ladite information d'alerte.

Selon différentes caractéristiques supplémentaires de l'invention, qui pourront être prises ensemble ou séparément et qui forment autant de modes de réalisation de l'invention:
- ladite étape de détermination de l'information de distance est réalisée à l'aide d'un ou plusieurs capteurs à ultra-sons,
- ladite étape de détermination de l'information de distance comprend une étape de classement de ladite distance en fonction de seuils de distance entre ledit véhicule et ledit obstacle, lesdits seuils de distance étant décroissant avec une croissance des niveaux de risque,
- ladite étape de détermination de l'information de vitesse comprend une étape de classement de ladite vitesse en fonction de seuils de vitesse dudit véhicule, lesdits seuils de vitesse étant croissant avec une croissance des niveaux de risque,
- ladite étape de détermination du niveau de risque comprend une étape de calcul d'un temps avant collision à partir de ladite information de distance et de ladite information de vitesse,
- ladite information d'alerte comprend au moins trois valeurs discrètes, notamment cinq valeurs discrètes, correspondant chacune à des niveaux de risques relatifs à des situations comprises entre une situation évaluée sans risque et une situation de collision,
- les valeurs des informations d'alerte sont regroupées selon une table de données en deux dimensions comprenant des cellules, une valeur de chacune des cellules tenant compte d'un couple de valeurs d'entrée correspondant à des lignes et des colonnes de ladite table, chacune des cellules de la table correspondant à une des valeurs des informations d'alerte, chaque couple de valeurs d'entrée correspondant à un intervalle de distance entre ledit véhicule et ledit obstacle et à un intervalle de vitesse dudit véhicule, de façon à permettre un traitement matriciel desdites informations de distance et de vitesse,
- ladite table de données comprend des couples pour lesquelles à intervalle de distance identique, l'information d'alerte prend des valeurs différentes pour des intervalles de vitesse différents,
- ladite table de données comprend des couples pour lesquelles à intervalle de vitesse identique, ladite information d'alerte prend des valeurs différentes pour des intervalles de distance différents,
- ladite table de données présentant N colonnes et N lignes, N étant un nombre entier, les cellules correspondant à des valeurs identiques de l'information d'alerte forment des diagonales sauf pour une valeur de ladite information 24 d'alerte en relation avec le niveau de risque le plus haut,
- au moins la moitié des cellules de ladite table de données correspond à la valeur de ladite information 24 d'alerte en relation avec le niveau de risque le plus haut.

L'invention concerne aussi un procédé d'aide aux manœuvres, ledit procédé comprenant une étape d'exploitation d'une information d'alerte provenant du procédé de génération d'information d'alerte tel que décrit plus haut.

Selon différentes caractéristiques supplémentaires de l'invention, qui pourront être prises ensemble ou séparément et qui forment autant de modes de réalisation de l'invention:
- ledit procédé d'aide aux manœuvre comprend une étape d'émission d'un signal tenant compte de ladite information d'alerte.
- ledit signal est un signal sonore émis par une interface sonore,
- ledit signal sonore présente une fréquence et/ou intensité sonore fonction dudit niveau de risque,
- ledit signal est une information visuelle affichée sur un écran,
- ladite information visuelle utilise un code couleur fonction du niveau de risque,
- ledit signal est à l'attention du conducteur,
- ledit procédé de signalisation comprend une étape d'arrêt d'émission dudit signal, ladite étape d'arrêt du signal intervenant à réception d'une information d'activation d'une pédale de frein dudit véhicule,
- ledit procédé d'aide aux manœuvre comprend une étape de préconditionnement, notamment mécanique, d'un dispositif de freinage du véhicule tenant compte de ladite information d'alerte.

L'invention concerne aussi un système de traitement numérique comprenant des éléments matériels et/ou logiciels mettant en œuvre le procédé de génération d'une information d'alerte ou le procédé d'aide aux manœuvres tels que décrits plus haut.

L'invention concerne aussi un véhicule automobile comprenant ledit système de traitement numérique tel que décrit plus haut.

L'invention concerne aussi un produit programme d'ordinateur comprenant des instructions de code de programme enregistrées sur un support lisible par ordinateur pour mettre en œuvre le procédé de génération d'une information d'alerte et/ou le procédé d'aide aux manœuvres tels que décrit plus haut, lorsque ledit programme fonctionne sur un ordinateur.

L'invention concerne aussi un support d'enregistrement de données, lisible par un ordinateur, sur lequel est enregistré un programme d'ordinateur comprenant des instructions de code de programme de mise en œuvre du procédé de génération d'une information d'alerte et/ou du procédé d'aide aux manœuvres tels que décrits plus haut.

L'invention sera mieux comprise, et d'autres buts, détails, caractéristiques et avantages de celle-ci apparaîtront plus clairement au cours de la description explicative détaillée qui va suivre d'au moins un mode de réalisation de l'invention, donné à titre d'exemple purement illustratif et non limitatif, en référence aux dessins schématiques annexés parmi lesquels :
[Fig.1] illustre de façon schématique un exemple de mise en œuvre des procédés de génération d'une information d'alerte et d'aide aux manœuvre conformes à l'invention ;
[Fig.2] illustre de façon schématique un exemple de table de données exploitée lors d'une mise en œuvre desdits procédés.

Il faut tout d'abord noter que les « premier », « deuxième », « troisième », ... sont uniquement utilisés pour distinguer les composants concernés entre eux et ne présagent ni d'un ordre ni d'une éventuelle importance desdits composants.

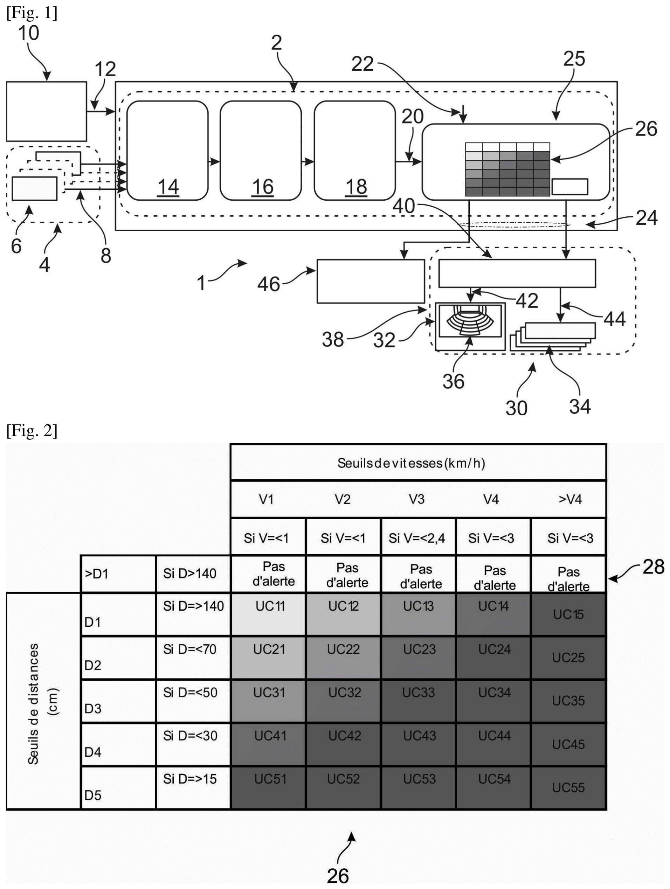

Comme illustré à la [Fig.1], l'invention concerne un procédé de génération d'une information d'alerte lors d'une manœuvre d'un véhicule.

Par « manœuvre », on entend déplacement du véhicule en marche arrière et/ou en marche avant à faible vitesse, notamment en dessous de 15 km/h voire moins de 10 km/h, voire même moins de 5 km/h, et/ou avec un rapport de transmission entre des roues et une motorisation du véhicule le plus élevé parmi les rapports de transmission destinés à être utilisé par le véhicule. Il s'agit, par exemple, d'opérations de stationnement.

Ledit procédé de génération de l'information d'alerte est mis en œuvre par un système 1 de traitement numérique embarqué sur ledit véhicule.

Ledit système de traitement embarqué 1 comprend, notamment, des unités de traitement données munies de microprocesseurs et/ou des unités de stockage d'informations permettant de traiter des données entrantes et de délivrer des données sortantes.

Dans l'exemple de réalisation illustré ledit système de traitement embarqué 1 comprend un calculateur 2 d'aide aux manœuvres, en particulier un calculateur d'aide au parking, auquel est affectée une partie des unités de traitement et de stockage de données dudit système 1 de traitement embarqué.

Ledit véhicule comprend en outre différents capteurs 4, notamment un ou des capteurs à ultra-son 6, permettant d'établir des données 8 relatives à une distance entre le véhicule et un obstacle se trouvant plus ou moins à proximité. Le ou lesdits capteurs 4, 6 sont destinés à transmettre lesdites données 8 de distance audit système de traitement embarqué 1, en particulier audit calculateur 2 d'aide aux manœuvre. Ledit système 1 de traitement embarqué, en particulier ledit calculateur 2 d'aide aux manœuvres, est en outre configuré pour prendre en compte une information relative à une vitesse du véhicule, dite information de vitesse 22.

Ledit véhicule comprend en outre un réseau 10 de communication permettant de transmettre différentes informations 12, dites informations véhicules, audit système 1 de traitement embarqué, en particulier audit calculateur 2 d'aide aux manœuvres. Lesdites informations véhicule 12 comprennent, notamment, des informations relatives à une trajectoire du véhicule.

Ledit calculateur 2 comprend, par exemple, une unité 14 de contrôle des capteurs 6, une unité 16 de calcul des distances entre le véhicule et les obstacles détectées par lesdits capteurs 6 et/ou une unité 18 de détermination des obstacles se trouvant sur la trajectoire du véhicule.

Le procédé de génération de l'information d'alerte conforme à l'invention comprend une étape de détermination d'une information relative à la distance entre ledit véhicule et le ou les obstacles se trouvant plus ou moins à proximité du véhicule, dite information de distance 20. Il s'agit ici d'une information générée par ladite unité 18 de détermination des obstacles se trouvant sur la trajectoire du véhicule, notamment à partir desdites données de distance 8.

Ledit procédé de génération de l'information d'alerte comprend en outre une étape de détermination de l'information de vitesse 22 et une étape d'évaluation d'un niveau de risque de collision entre ledit véhicule et ledit obstacle en vue d'établir ladite information d'alerte, repérée 24 sur la figure, en tenant compte de ladite information de distance 20 et de ladite information de vitesse 22. On comprend qu'une valeur de ladite information 24 d'alerte est corrélée au niveau de risque de collision, lui-même établi à partir des informations 20 de distance et 22 de vitesse du véhicule.

La prise en compte de la vitesse, combinée avec celle de la distance, fiabilise l'évaluation du niveau de risque permettant de la sorte, grâce à l'invention, de mieux adapter une réaction du conducteur du véhicule à l'aide de ladite information d'alerte qui pourra être exploitée de différente façon pour éviter une collision avec le ou les obstacles se trouvant à proximité lors des manœuvres du véhicule, comme cela sera développé plus bas.

Dans le mode de réalisation illustré, ledit système de traitement embarqué 1, en particulier ledit calculateur 2 d'aide aux manœuvres comprend une unité 25 de génération de l'information 24 d'alerte configurée pour recevoir et traiter lesdites informations de distance et de vitesse 20, 22 et délivrer ladite information d'alerte 24.

Comme déjà évoqué, ladite étape de détermination de l'information 22 de distance est réalisée, par exemple, à partir du ou desdits capteurs à ultra-sons 6. Préférentiellement, elle comprend une étape de classement de ladite distance en fonction de seuils de distance entre ledit véhicule et ledit obstacle, lesdits seuils de distance étant décroissant avec une croissance des niveaux de risque. Dans l'exemple de réalisation illustré, les seuils de distance sont de 140 cm, 70 cm, 50 cm, 30 cm et/ou 15 cm.

Cumulativement ou alternativement, ladite étape de détermination de l'information 24 de vitesse comprend une étape de classement de ladite vitesse en fonction de seuils de vitesse dudit véhicule, lesdits seuils de vitesse étant croissant avec une croissance des niveaux de risque. Dans l'exemple de réalisation illustré, les seuils de vitesse sont de 1 km/h, 2, km/h, 2,4 km/h et/ou 3 km/h.

Avantageusement, ladite étape de détermination du niveau de risque comprend une étape initiale d'activation selon laquelle ledit niveau de risque est évalué si et uniquement si ladite information de vitesse indique que le véhicule est en marche arrière et/ou en marche avant à faible vitesse, notamment en dessous de 15 km/h voire moins de 10 km/h, voire même moins de 5 km/h.

Préférentiellement, ladite étape de détermination du niveau de risque comprend une étape de calcul d'un temps avant collision à partir de ladite information 20 de distance et de ladite information 22 de vitesse. Une valeur de ladite information 24 d'alerte dépend, par exemple, du temps avant collision calculé par rapport à des seuils de temps avant collision, notamment 3 secondes, 2 secondes, 1,5 secondes et 1 seconde.

Ladite information 24 d'alerte comprend, par exemple, au moins trois valeurs discrètes correspondant chacune à des niveaux de risques relatifs à des situations comprises entre une situation évaluée sans risque et une situation de collision.

Dans le mode de réalisation illustré, elle comprend cinq valeurs discrètes représentées ici par des niveaux de gris différents. Autrement dit, tant que la situation est estimée sans risque, notamment en raison d'une valeur de l'information 20 de distance et d'une valeur de l'information 22 de vitesse vis-à-vis à des seuils en cause, une valeur de l'information 24 d'alerte est à zéro. L'information 24 d'alerte prend ensuite une valeur de croissante de 1/5 à 5/5 avec une décroissance de la distance et/ ou une croissance de la vitesse. La valeur de 5/5 correspond à une situation d'impact imminent avec l'obstacle si le conducteur ne stoppe pas immédiatement son véhicule.

Comme cela ressort mieux à la [Fig.2], les différentes valeurs des informations 24 d'alerte sont avantageusement regroupées selon une table de données 26 en deux dimensions comprenant des cellules UCij, i variant entre 1 et N, N étant un nombre entier et représentant le nombre de lignes de la table 26 de données et j variant entre 1 et M, M étant un nombre entier et représentant le nombre de colonnes de ladite table 26 de données. Une valeur de chacune des cellules tient compte d'un couple de valeurs d'entrée correspondant à des lignes et des colonnes de ladite table 26 de données. Chacune des cellules UCij de la table 26 de données correspond à une des valeurs de l'information 24 d'alerte, ici représentée par son niveau de gris respectif. Chaque couple de valeurs d'entrée correspondant à un intervalle de distance entre ledit véhicule et ledit obstacle et à un intervalle de vitesse dudit véhicule. Une telle formalisation des données permet un traitement matriciel desdites informations de distance et de vitesse 20, 22.

Ladite table de données 26 est stockée, par exemple, au niveau de l'unité 25 de génération de l'information 24 d'alerte.

Dans l'exemple illustré, le nombre de lignes et le nombre de colonnes sont les mêmes, ce nombre correspondant en outre ici au nombre de niveaux de l'information 24 d'alerte, ce qui n'est cependant pas limitatif de l'invention.

Ici, les intervalles de distance correspondent à des valeurs de distance décroissante de la première à la dernière des lignes et les intervalles de vitesse correspondent à des valeurs de vitesse croissante de la première à la dernière des colonnes.

La première colonne correspond à des vitesses inférieures ou égales à 1 km/h, la deuxième colonne à des vitesses strictement supérieures à 1 km/h et inférieures ou égales à 2km/h, la troisième colonne à des vitesses strictement supérieures à 2 km/ h et inférieures ou égales à 2,4 km/h, la quatrième colonne à des vitesses strictement supérieures à 2,4 km/h et inférieures ou égales à 3 km/h et la cinquième colonne à des vitesses strictement supérieures à 3 km/h.

La première ligne correspond à des distances inférieures ou égales à 140 cm et strictement supérieures à 70 cm, la deuxième ligne à des distances inférieures ou égales à 70 cm et strictement supérieures à 50 cm, la troisième ligne à des distances inférieures ou égales à 50 cm et strictement supérieures à 30 cm, la quatrième ligne à des distances inférieures ou égale à 30 cm et strictement inférieures à 15 cm et la cinquième colonne à des distances inférieures ou égales à 15 cm.

De façon plus générale, de ligne en ligne, l'intervalle de distance correspondant à une ligne donnée présente une amplitude décroissante, éventuellement par pallier, en allant des lignes de plus petit indice aux lignes de plus grand indice.

Avantageusement, si l'information 20 de distance correspond à une distance supérieure au premier seuil de distance, à savoir ici 140 cm, le niveau de l'information 24 d'alerte est à zéro quelle que soit la valeur de l'information 22 de vitesse comme cela apparaît à la ligne repérée 28 à la [Fig.2].

Dans le mode de réalisation illustré, ladite table 26 de données comprend des couples pour lesquelles à intervalle de distance identique, l'information 24 d'alerte prend des valeurs différentes pour des intervalles de vitesse différents, ceci jusqu'à un seuil limite de distance et/ou de vitesse. Cumulativement ou alternativement, elle comprend en outre des couples pour lesquelles à intervalle de vitesse identique, ladite information 24 d'alerte prend des valeurs différentes pour des intervalles de distance différents, ceci jusqu'à un seuil limite de distance et/ou de vitesse.

Comme déjà évoqué, avantageusement, ladite table de données présente N colonnes et N lignes. En outre, toujours avantageusement, les cellules correspondant à des valeurs identiques de l'information 24 d'alerte forment des diagonales.

Cumulativement ou alternativement, au moins la moitié des cellules de ladite table de données correspond à la valeur la plus élevée de ladite information 24 d'alerte.

Les cellules se trouvant sur une même diagonale correspondent, par exemple, à un intervalle donné de temps avant collision lié aux seuils de temps avant collision évoqués plus haut.

Par exemple, la cellule UC11 formant à elle seule la première diagonale correspond à un temps avant collision supérieure à 3 secondes. La valeur de l'information 24 d'alerte est alors de 1/5. Les cellules UC12 et UC 21 formant la deuxième diagonale correspondent à un temps avant collision compris entre 2 et 3 secondes. La valeur de l'information 24 est alors de 2/5. Les cellules UC13, UC22 et UC 31 formant la troisième diagonale correspondent à un temps avant collision compris entre 1,5 et 2 secondes. La valeur de l'information 24 est alors de 3/5. Les cellules UC14, UC23, UC32 et UC 41 formant la quatrième diagonale correspondent à un temps avant collision compris entre 1 et 1,5 secondes. La valeur de l'information 24 d'alerte est alors de 4/5. La valeur de l'information 24 est de 5/5 pour les autres cellules.

En variante, ceci qui précède reste vrai en inversant simultanément l'ordre des lignes ou des colonnes et/ou en permutant les lignes et les colonnes.

En se reportant de nouveau à la [Fig.1], on constate que l'invention porte aussi sur un procédé d'aide aux manœuvres.

Ledit procédé d'aide aux manœuvres comprend, par exemple, une étape d'exploitation de l'information 24 d'alerte provenant du procédé de génération d'information d'alerte évoqué plus haute. Ledit procédé d'aide aux manœuvres exploite pour cela le système de traitement embarqué 1, en particulier ledit calculateur d'aide 2 d'aide aux manœuvres.

De façon préférentielle, ledit procédé d'aide aux manœuvres comprend une étape d'émission d'un signal 30, 32 tenant compte de ladite information 24 d'alerte. Ledit signal 30, 32 est configuré pour être, par exemple à l'attention du conducteur du véhicule en train d'être manœuvré.

Ledit signal est constitué, par exemple, d'un signal sonore 30, notamment émis par une interface sonore telle qu'un ou des haut-parleurs 34, et/ou d'une information visuelle 32, affichée par un ou des écrans 36. Avantageusement, ledit signal sonore 30 présente une fréquence et/ou une intensité fonction dudit niveau de risque relatif à la valeur de l'information 24 d'alerte en cause et/ou ladite information visuelle exploite un code couleur fonction dudit niveau de risque relatif à la valeur de l'information 24 d'alerte en cause.

Ladite information visuelle 32 est éventuellement configurée pour discriminer un localisation de l'obstacle entre différentes zones autour du véhicule. Ladite information 24 d'alerte prise en compte dans le procédé d'aide aux manouvres est alors combinée à une information de localisation de l'obstacle en cause.

A cette fin, ledit système de traitement embarqué 1 comprend en outre ici une unité d'interface homme machine 38. Ladite unité d'interface homme machine 38 comprend, par exemple, un calculateur d'interface 40 configuré pour recevoir ladite information d'alerte 24 et émettre des informations 42, 44 de déclenchement du signal à émettre à destination du ou des haut-parleurs 34 et/ou du ou des écrans 36.

Avantageusement, ledit procédé d'aide aux manœuvres comprend une étape d'arrêt d'émission dudit signal 30, 32. Ladite étape d'arrêt du signal intervient, par exemple, à réception d'une information d'activation d'une pédale de frein dudit véhicule.

Cumulativement ou alternativement, ledit procédé d'aide aux manœuvres comprend une étape de préconditionnement, notamment mécanique, d'un dispositif de freinage du véhicule tenant compte de ladite information 24 d'alerte. Il s'agit, par exemple, d'un rapprochement physique entre eux d'organes de freinage dudit dispositif de freinage, notamment de plaquettes de frein.

Ledit système de traitement embarqué comprend ici pour cela, une unité 46 de contrôle dudit dispositif de freinage. Ladite unité 46 de contrôle dudit dispositif de freinage est configurée pour recevoir ladite information 24 d'alerte et activée ledit dispositif de freinage en fonction de la valeur de ladite information 24 de freinage.

## Revendications

1. **Procédé de génération d'une information (24) d'alerte** lors d'une manœuvre d'un véhicule en marche arrière et/ou à vitesse réduite, ledit procédé de génération étant mis en œuvre par un système de traitement numérique (1), ledit procédé de génération comprenant une étape de détermination d'une information (20) relative à une distance entre ledit véhicule et un obstacle, dite information de distance, une étape de détermination d'une information (22) relative à la vitesse du véhicule, dite information de vitesse, et une étape d'évaluation d'un niveau de risque de collision entre ledit véhicule et ledit obstacle en vue d'établir ladite information (24) d'alerte en tenant compte de ladite information (20) de distance et de ladite information (22) de vitesse.

2. Procédé de génération selon la revendication précédente dans lequel ladite étape de détermination de l'information (20) de distance est réalisée à l'aide d'un ou plusieurs capteurs à ultra-sons (6).

3. Procédé de génération selon l'une quelconque des revendications précédentes dans lequel ladite étape de détermination de l'information (20) de distance comprend une étape de classement de ladite distance en fonction de seuils de distance entre ledit véhicule et ledit obstacle, lesdits seuils de distance étant décroissant avec une croissance des niveaux de risque.

4. Procédé de génération selon l'une quelconque des revendications précédentes dans lequel ladite étape de détermination de l'information (22) de vitesse comprend une étape de classement de ladite vitesse en fonction de seuils de vitesse dudit véhicule, lesdits seuils de vitesse étant croissant avec une croissance des niveaux de risque.

5. Procédé de génération selon l'une quelconque des revendications précédentes dans lequel ladite étape de détermination du niveau de risque comprend une étape de calcul d'un temps avant collision à partir de ladite information (20) de distance et de ladite information (22) de vitesse.

6. Procédé de génération selon l'une quelconque des revendications précédentes dans lequel des valeurs de l'information (24) d'alerte sont regroupées selon une table (26) de données en deux dimensions comprenant des cellules (UCij), une valeur de chacune des cellules (UCij) tenant compte d'un couple de valeurs d'entrée correspondant à des lignes et des colonnes de ladite table, chacune des cellules (UCij) de la table correspondant à une des valeurs des informations (24) d'alerte, chaque couple de valeurs d'entrée correspondant à un intervalle de distance entre ledit véhicule et ledit obstacle et à un intervalle de vitesse dudit véhicule, de façon à permettre un traitement matriciel desdites informations de distance et de vitesse (20, 22).

7. Procédé de génération selon la revendication précédente dans lequel ladite table (26) de données présentant N colonnes et N lignes, N étant un nombre entier, les cellules (UCij) correspondant à des valeurs identiques de l'information d'alerte formant des diagonales sauf pour une valeur de ladite information (24) d'alerte en relation avec le niveau de risque le plus haut.

8. Procédé de génération selon la revendication précédente dans lequel au moins la moitié des cellules (UCij) de ladite table (26) de données correspond à la valeur de ladite information (24) d'alerte en relation avec le niveau de risque le plus haut.

9. **Procédé** d 'aide **aux manœuvres,** ledit procédé comprenant une étape d'exploitation d'une information (24) d'alerte provenant du procédé de génération d'information d'alerte selon l'une quelconque des revendications précédentes.

10. Procédé d'aide aux manœuvres selon la revendication précédente comprend une étape d'émission d'un signal (30, 32) tenant compte de ladite information (24) d'alerte.

11. Procédé d'aide aux manœuvres selon l'une quelconque des revendications 9 ou 10 comprenant une étape de préconditionnement d'un dispositif de freinage du véhicule tenant compte de ladite information (24) d'alerte.

12. Système **de traitement numérique** comprenant des éléments matériels et/ou logiciels mettant en œuvre le procédé de génération d'une information d'alerte ou le procédé d'aide aux manœuvres respectivement selon l'une quelconque des revendications 1 à 8 ou 9 à 11.

13. **Véhicule automobile** comprenant ledit système de traitement numérique selon la revendication précédente.

14. **Produit programme d'ordinateur** comprenant des instructions de code de programme enregistrées sur un support lisible par ordinateur pour mettre en œuvre le procédé de génération d'une information d'alerte et/ou le procédé d'aide aux manœuvres respectivement selon l'une quelconque des revendications 1 à 8 ou 9 à 11, lorsque ledit programme fonctionne sur un ordinateur.

15. **Support d'enregistrement de données,** lisible par un ordinateur, sur lequel est enregistré un programme d'ordinateur comprenant des instructions de code de programme de mise en œuvre du procédé de génération d'une information d'alerte et/ou du procédé d'aide aux manœuvres respectivement selon l'une quelconque des revendications 1 à 8 ou 9 à 11.
